# EUROPEAN PATENT APPLICATION

(11) **EP 1 069 424 A2**
(43) Date of publication of application: **17.01.2001**
(21) Application number: 00305763.5
(22) Date of filing: 07.07.2000
(51) Int. Cl.: G01N 21/11, G01N 21/03, G01N 21/51

(54) **A colourimetric detector**

(30) Priority: 16.07.1999 GB 9916807
(71) Applicant: Capital Controls Limited, Didcot, Oxon OX11 7HR (GB)
(72) Inventor: Packman, Andy, Reading, Berks RG2 9AR (GB); Nicholson, Joe, Didcot, Oxon OX11 7XQ (GB); Long, Michael, Didcot, Oxon OX11 8ST (GB); Grant, Neil, Nettlebed, Oxon RG9 5AS (GB)
(74) Representative: Kirkham, Nicholas Andrew

(57) **Abstract**

The present invention relates to a colourimetric detector apparatus which is designed to determine liquid samples which habitually contain solid contaminants and will also measure clean water samples which contain no solid contaminants. The invention provides a apparatus and methods where a volume of gas is introduced into the optical cell to promote mixing of the sample and reagents, ensure that full volumes of sample and reagents are supplied to the optical cell and also the gas act as a buffer between the liquid and the piston to reduce wear on the piston.

## Description

The present invention relates to an apparatus for colourimetric detection and a method of colourimetric detection. In particular the present invention relates to apparatus and methods for colourimetric determination of water samples, such as the effluent produced by a trickling filter or other water purification filter to test that the levels of impurities have been reduced to a sufficient level, or the input to such filters, or the water supply from factories etc. It can also be used on clean water (drinking water).

According to a first embodiment of the present invention there is provided an assembly for a colourimetric detector, comprising a optical cell and a manifold, the optical cell being generally cylindrical and closed at one end by a piston movable to alter the volume of the optical cell, wherein the manifold is arranged to supply fluid selected from liquid sample, reagent and a volume of gas, to the optical cell through an inlet in the end of the optical cell opposite the piston. The apparatus advantageously provides the volume of gas (e.g. air) that will promote mixing of the liquids.

Preferably, the fluid is arranged to enter the optical cell from the manifold under the influence of the piston moving to increase the volume of the optical cell as this is a simple and efficient way to input fluids.

Normally, the fluid is arranged to leave the optical cell through said inlet as this simplifies the design of the assembly.

Preferably, the fluid is arranged to leave the optical cell under the influence of the piston moving to reduce the volume of the optical cell as this is a simple and efficient design.

The piston is advantageously connected to an elongate screw which extends through a threaded opening in a fixed housing, rotation of the screw causing piston movement. This allows precise control in a simple manner.

Preferably, the piston is movable by means of a stepper motor as the piston will normally be moved to form distinct volume of the optical cell rather than needing infinite variability.

Preferably, the screw is mechanically coupled to the stepper motor via a drive gear attached to an output shaft of the motor and a driven gear attached to the screw and advantageously, the drive gear and the driven gear are two 90 degree bevel gears. This provides a simple way to allow the head assembly to be dismantled from the housing to allow ready maintenance, It is noted that the drive arrangement which allows simple dismantlement of the head assembly can be used independently of the other features of the invention and is not necessarily limited to colourimetric determination.

Normally, the piston is arranged to be movable to an initial position where the volume of the optical cell is approximately zero and the piston is movable from said initial position to a series of subsequent positions where the volume of the optical cell is greater in the first subsequent position in the series than in the initial position and the volume of each subsequent position is greater than the volume in the immediately preceding position in the series. This may be accomplished very easily by means of a stepper motor forming the drive means.

Advantageously, the movement of the piston is controlled by control means as this allows a variety of different determinations to be carried out using the same apparatus but controlled by software in slightly different manners depending upon the precise test being conducted. This also allows updating of protocols etc in simple fashion.

The control means is advantageously arranged to control the manifold. In this way more precise control may be effected. The control means may be arranged to determine which fluid or none is supplied by the manifold to the optical cell.

The control means may be arranged so that fluid is only supplied when the piston is increasing the volume of the optical cell.

Advantageously, the control means is arranged so that a predetermined volume of gas is supplied from the manifold to the optical cell when the piston moves to the position corresponding to the required volume of the optical cell. This allows the volume of sample and reagents in the optical cell to be more accurate controlled as none remains in the fluid lines or the manifold and promotes mixing of the liquids when all the liquid is present.

The control means is preferably arranged to maintain the piston in its required position for a predetermined period, the predetermined period being determined to allow said gas to flow through the optical cell and form a gas cushion between the piston and the liquid in the optical cell. Thus when the optical cell is emptied there is minimum contact between liquid (and other solid contaminants in the liquid) and the piston, thus reducing wear to the piston.

Heating means arranged to heat the sample in the optical cell is preferably provided as this can, for example, shorten cycling time for the apparatus.

Preferably, the heating means comprises support arms which are arranged to support the optical cell and normally the support arms will include heating elements located therein, such as film resistors. This is an efficient design.

Preferably, the motor is thermally coupled to the heating means as this provides a ready source of heat energy. It is noted that using the motor to provide the heat energy for selectively heating the optical cell is an advantageous feature which can be used independently of the other features of this invention and is not necessarily limited to colourimetric determination.

A temperature sensor arranged to sense the temperature in the optical cell is normally provided. The control means is advantageously arranged to selectively heat the optical cell, though the feedback of information from the temperature sensor.

Preferably, the stepper motor has 3 states namely a running state, a stationary state and de-energised state, the controller controlling said three states to selectively heat the optical cell. This is a particularly preferred design.

The piston is normally arranged to be above the inlet of the optical cell.

A colourimetric detector is normally arranged to transmit light through the optical cell and sample light transmission through the optical cell. The colourimetric detector often includes an LED to produce light to transmit through the optical cell. Preferably, the colourimetric detector comprises a detector means and a transmission means (e.g. an LED) and the detector means is housed in a support arm and the transmission means is housed in another support arm and the two support arms are arranged to support the optical cell.

According to a second aspect of the present invention there is provided a colourimetric detection apparatus which includes the assembly of the first aspect of the present invention.

According to a third aspect of the present invention there is provided a method of colourimetric detection from a sample, comprising the steps of:
a) inputting selectively a liquid sample reagent and a volume of gas into a optical cell;
b) determining the transmission of light through said sample; and
c) outputting the fluids from the optical cell.

Preferably, the volume of gas is input into the optical cell after the liquids in step a) as this allows full mixing of the sample and reagents and purges the fluid inlet lines to ensure that full volumes of sample and reagents are introduced into the cell.

Advantageously, the volume of gas is output from the optical cell after the liquid in step c) as this minimises wear on the piston and purges the fluid lines from sample contamination.

The present invention will now be described with reference to the accompanying figures which show a particularly preferred amendment of the invention, in which:

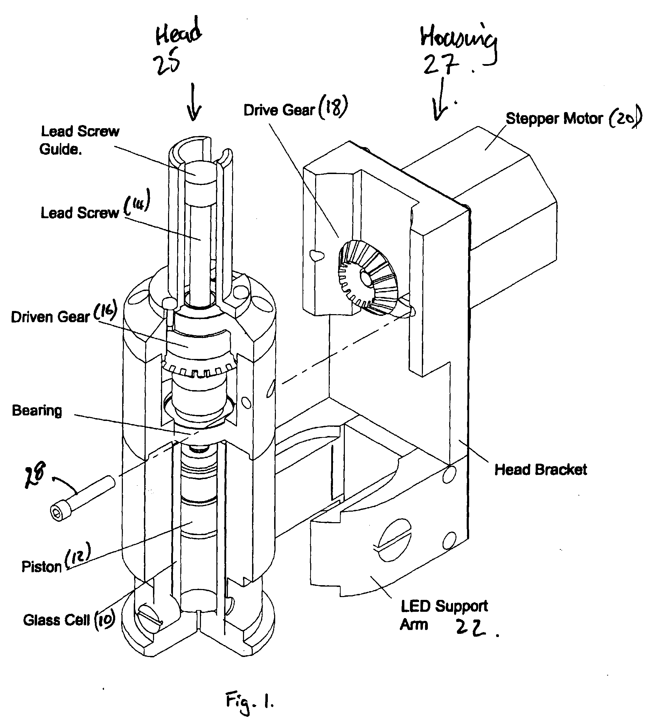

- Fig. 1: shows an exploded view of a optical cell assembly according to a preferred embodiment of the present invention;

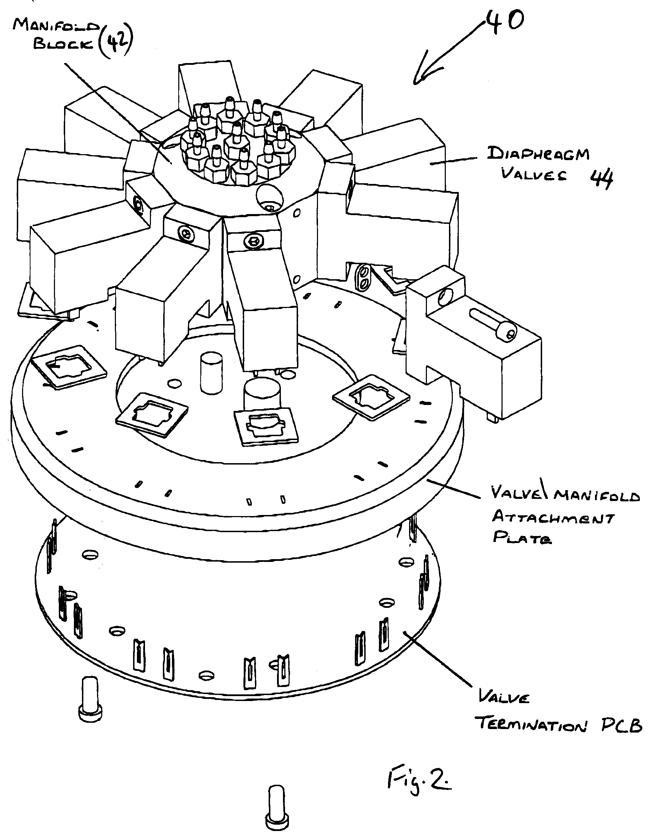

- Fig. 2: shows an exploded view of a manifold block assembly according to a preferred embodiment of the present invention;

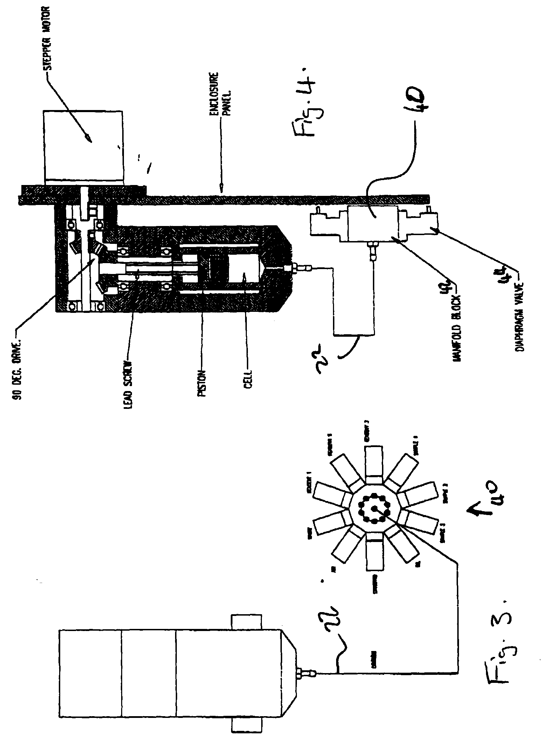

- Fig. 3: shows a schematic view of the manifold of Fig. 2 connected to a head assembly of Fig. 1 according to a preferred embodiment of the present invention;
- Fig. 4: shows a schematic cross-section through a head assembly according to Fig. 1 in fluid connection to manifold according to Fig. 2 mounted in a colourimetric detector apparatus according to a preferred embodiment of the present invention.

The principle of the illustrated embodiment is to accurately measure levels of determinand in a water sample which will often contain solid contaminants. This is done by drawing a sample into a cell 10, accurately adding to that sample for example three reagents which will create colour development if the determinand is present. The level of colour development is then measured by passing light of a known band of wavelength through the sample and measuring the light transmission through the sample.

The head assembly consists of a PTFE piston 12 inside a glass tube, the optical cell 10. This piston 12 is drawn up the tube 10 like a syringe by means of lead screw 14, which via two 90 degree bevel gears 16, 18 is driven by a stepper motor 20.

The sequence in which the solutions are drawn into the cell is determined by the valve block assembly 40. This assembly 40 consists of a manifold block 42 and in the example ten diaphragm valves 44 arranged around the manifold 42 in a circular fashion. Eight valves bring in solutions, one valve 44 is for air and the final valve 44 is for waste.

The head assembly is arranged to draw up the required volume of sample when adopting the method of the present invention, followed by the required volume of the first reagent. The light transmission through the sample is taken at this stage so that any background colour can be taken into account. Next the final reagents are drawn into the cell 10. At this point the air valve opens and air is drawn into the cell 10 purging the manifold 40 and interconnecting tube 22 of any remaining reagents so that the full volume enters the cell. As the air is drawn into the cell 10 it rises through the sample and reagent, causing them to be mixed thoroughly and creating a pocket between the solution and the piston 12. At this stage there is a pause while the colour development and measurement occur.

On emptying the cell 10 the waste valve 44 opens and the piston 12 travels down, there is no contact between the piston 12 and solution apart from residue left on the wall of the cell 10. This greatly improves the life of the piston 12 as contact with particles such as sand in the sample now occur rarely. The air is last to leave the cell 10 and follows the sample through the interconnecting tube 22 and manifold 40 to waste and purges the system before the next sample is drawn in and hence improves the accuracy of the next measurement. The system is particularly designed for sequential measurement.

The head assembly has been designed so that removal of the head 25 from housing 27 is very easy. Two screws 28 are removed from the head 25 allowing it to slide forward on the supporting arms 22 and to be held in the hand. As the head 25 is removed the drive simply disconnects as the bevel gears 16, 18 separate. The LED light source (not shown) and detector (not shown) are housed in the support arms 22 so that they remain in place when the head 25 is removed. This allows for particularly easy maintenance of the unit and this design may be used on any type of optical cell assembly.

In some applications it is required to raise the temperature of the sample to increase the speed of the colour development or otherwise. With the present invention this is done in a very unique way which may be adopted on any type of assembly.

The piston 12 is carried out using a proprietary stepper motor 20, with the associated drive electronics directly controlled by a peripheral micro-controller of a control means (not shown). The stepper motor 20 series resistors cause heat which previously was considered a disadvantage to their use as the heat has to be dissipated as waste heat. In the present invention this waste heat is directed into the two aluminium support arms 22 from two 10Watt film resistors (not shown). The aluminium support housing 27 acts as a large heat sink to remove heat from inside the enclosure, in turn this causes localised heating of the cell side arms 22 which is selectively conducted into the sample being measured.

A temperature sensing element (not shown) between the support arms 22, is provided and the signal from the sensing element is fed via suitable electronics into the peripheral micro-controller and control means and thus completes the temperature feedback circuitry to allow selective heating of the optical cell 10.

The stepper motor 20 may be in three states, running (rotating), stationary (energised), and off (de-energised). During normal operation the stepper motor is predominately not rotating, the control means can utilise the remaining two states to implement on-off temperature control.

The software operating the control means permit full 3 term control to be implemented, and therefore temperature of a sample can be altered without requiring an additional heat source or otherwise the overhead of additional heating elements.

Preferably the colourimetric monitor uses the software described in GB application No. 9804616.2 filed on 4th March 1998 with the necessary alteration for colourimetric detection. In particular the kernal software may be used. The detector apparatus of GB application No. 9804615.4 also filed on 4th March 1998 is also useful in terms of the type of associated hardware and software in the present detector though the present detector is particularly for colourimetric analysis.

In general the present invention can be thought of as relating to a colourimetric detector apparatus which is designed to determine liquid samples which habitually contain solid contaminants. The invention provides an apparatus and methods where a volume of gas is introduced into the optical cell to promote mixing of the sample and reagents, ensure that full volumes of sample and reagents are supplied to the optical cell and also the gas acts as a buffer between the liquid and the piston to reduce wear on the piston.

## Claims

1. An assembly for a colourimetric detector, comprising a optical cell and a manifold, the optical cell being generally cylindrical and closed at one end by a piston movable to alter the volume of the optical cell, wherein the manifold is arranged to supply fluid selected from liquid sample, reagent and a volume of gas, to the optical cell through an inlet in the end of the optical cell opposite the piston.

2. The assembly according to claim 1, wherein:
(a) fluid is arranged to enter the optical cell from the manifold under the influence of the piston moving to increase the volume of the optical cell; and/or
(b) fluid is arranged to leave the optical cell through said inlet; and/or
(c) fluid is arranged to leave the optical cell under the influence of the piston moving to reduce the volume of the optical cell; and/or
(d) the piston is arranged to be above the inlet of the optical cell.

3. The assembly according to claim 1 or claim 2, wherein either (a) the piston is connected to an elongate screw which extends through a threaded opening in a fixed housing, rotation of the screw causing piston movement, and/or (b) the piston is movable by means of a stepper motor; and preferably the screw is mechanically coupled to the stepper motor via a drive gear attached to an output shaft of the motor and a driven gear attached to the screw and further preferably the drive gear and the driven gear are two 90 degree bevel gears.

4. The assembly according to any one of the preceding claims, wherein the piston is arranged to be movable to an initial position where the volume of the optical cell is approximately zero; and preferably wherein the piston is movable from said initial position to a series of subsequent positions where the volume of the optical cell is greater in the first subsequent position in the series than in the initial position and the volume of each subsequent position is greater than the volume in the immediately preceding position in the series.

5. The assembly according to any one of the preceding claims, wherein the movement of the piston is controlled by control means; preferably the control means is arranged to control the manifold; and further preferably the control means is arranged to determine which fluid or none is supplied by the manifold to the optical cell; and further preferably the control means is arranged so that fluid is only supplied when the piston is increasing the volume of the optical cell; and/or the control means is arranged so that a predetermined volume of gas is supplied from the manifold to the optical cell when the piston moves to the position corresponding to the maximum volume of the optical cell; and optionally wherein the control means is arranged to maintain the piston in its maximum position for a predetermined period, the predetermined period being determined to allow said gas to flow through the optical cell and form a gas cushion between the piston and the liquid in the optical cell.

6. The assembly according to any one of the preceding claims, further including heating means arranged to heat the sample in the optical cell and preferably the heating means comprises support arms which are arranged to support the optical cell; and optionally wherein the support arms include heating elements located therein in which case it is preferred that the heating elements comprise film resistors; and optionally, when the assembly is dependent upon claim 3 or claims dependent on claim 3, the motor is thermally coupled to the heating means; and/or
(a) further including a temperature sensor arranged to sense the temperature in the optical cell, and/or (b) the control means is arranged to selectively heat the optical cell, when the assembly has the features of claim 5 or claims dependent on claim 5 and optionally, wherein the stepper motor has three states namely a running state, a stationary state and de-energised state, the controller controlling said three states to selectively heat the optical cell.

7. The assembly according to any one of the preceding claims, wherein a colourimetric detector is arranged to transmit light through the optical cell and sample light transmission through the optical cell; and preferably the colourimetric detector includes an LED to produce light to transmit through the optical cell; and optionally the colourimetric detector comprises a detector means and a transmission means (e.g. an LED) and the detector means is housed in one support arm and the transmission means is housed in another support arm and the two support arms are arranged to support the optical cell.

8. A colourimetric detector including the assembly according to any one of claims 1 to 7.

9. A method of colourimetric detection from a sample, comprising the steps of:
a) inputting selectively a liquid sample reagent and a volume of gas into a optical cell;
b) determining the transmission of light through said sample; and
c) outputting the fluids from the optical cell.

10. The method according to claim 9, wherein either: the volume of gas is input into the optical cell after the liquids in step a); and/or the volume of gas is output from the optical cell after the liquid in step c).
